# EUROPÄISCHE PATENTSCHRIFT

(11) **EP 2 336 096 B1**
(45) Veröffentlichungstag und Bekanntmachung des Hinweises auf die Patenterteilung: **06.03.2013**
(21) Anmeldenummer: 10194203.5
(22) Anmeldetag: 08.12.2010
(51) Int. Cl.: C04B 28/02, C04B 28/08, C04B 28/10, C04B 28/14, C04B 40/06

(54) **Trockenmörtelformkörper sowie Verfahren zu seiner Herstellung**
Dry mortar body and method for its manufacture
Pièce à base de mortier sec et son procédé de fabrication

(30) Priorität: 10.12.2009 DE 102009057710
(43) Veröffentlichungstag der Anmeldung: 22.06.2011
(73) Patentinhaber: Fels-Werke GmbH, 38640 Goslar (DE)
(72) Erfinder: Boenkendorf, Ulf Dr., 31188, Holle (DE); Stumpf, Thomas Dr., 38667, Bad Harzburg (DE)
(74) Vertreter: Solf, Alexander

(56) Entgegenhaltungen:
- EP-A1- 0 211 364
- WO-A1-03/011789

## Beschreibung

Werktrockenmörtel - im Folgenden auch Trockenmörtel genannt - sind Gemische aus einem oder mehreren Bindemitteln, trockenen Zuschlägen und ggf. trockenen Zusatzstoffen und Zusatzmitteln. Werktrockenmörtel werden werkmäßig hergestellt, d. h. in entsprechenden Anlagen gemischt, gelagert und ggf. verpackt. Die Verarbeitung der Werktrockenmörtel erfolgt auf der Baustelle nach Zugabe von Wasser und durch Mischen.

Je nach Mörtelart und Mörtelmenge bzw. Mörtelbedarf wird der Werktrockenmörtel als Silo- oder Sackware ausgeliefert. Insbesondere bei der Verarbeitung von Sackware tritt durch Aufreißen, Umfüllen und Anmischen eine teilweise starke Staubbildung durch die feinteiligen Mörelbestandteile wie Bindemittel und Füllstoffe auf. Diese Staubbildung wirkt sich negativ auf Umwelt und Gesundheit aus und ist auch der Grund dafür, dass mehr und mehr gefordert wird, auf Baustellen staubreduzierte Mörtel zu verwenden.

Staubquellen sind insbesondere die Bindemittel wie Zement, Kalk oder Gips sowie feinteilige Füllstoffe wie Kalkstein- oder Quarzmehl. Die Feinteiligkeit dieser Trockenmörtelbestandteile ist aufgrund der daraus resultierenden gewünschten Eigenschaften eines mit Wasser angemachten Mörtels nicht zu ersetzen.

In diesem Zusammenhang ist aus der DE 102 33 833 A1 die Technologie der Formkörperbildung aus Trockenmörtelgemengen bekannt, wobei übliche Werktrockenmörtel auch mit Presshilfsmitteln und Sprengmitteln versetzt werden. Die Formkörper können so bemessen werden, dass ein ganzzahliges Vielfaches oder ein ganzzahliger Teiler von Grundeinheiten bezüglich der Masse oder der Anwendungsfläche vorliegen. Die Formgebung kann zum Beispiel diskontinuierlich auf Walzenpressen oder Stempelpressen oder kontinuierlich auf Strangpressen oder Walzenpressen erfolgen.

Die Formkörper sollen eine hohe spezifische Oberfläche aufweisen, damit beim Anrühren mit Wasser die Benetzung der Mörtelbestandteile mit Wasser und das Eindringen von Wasser in den Formkörper erleichtert oder beschleunigt wird. Eine hohe spezifische Oberfläche soll durch Granulieren von Formkörpern unmittelbar nach deren Herstellung erreicht werden.

Die bekannten Mörtelmischungen und die bekannten Formkörper weisen noch Mängel bezüglich Komprimierbarkeit der Mörtelgemenge und Abriebfestigkeit der Formkörper auf. Beim Komprimieren bilden große Körner Stützgerüste, wobei sich die Körner gegeneinander abstützen und eine optimale Verdichtung der Trockenmischung behindern, woraus resultiert, dass die feineren Bestandteile nicht ausreichend verdichtet werden. Auch gibt es keine preiswerten und optimal wirkenden, mineralischen Sprengmittel.

Die Formkörper werden meist als Sackware geliefert und erfahren bei der Handhabung der Sackware Abrieb, der in Form von Staub anfällt und eine störende Staubbelastung ergeben kann.

Außerdem ist die erwünschte schnelle Benetzbarkeit mit Wasser bei der Frischmörtelerzeugung nicht optimal.

Aufgabe der Erfindung ist, die Pressbarkeit und optimale Verdichtung von Trockenmörtelgemengen und die Festigkeit der gepressten Formkörper vor der Verarbeitung zu Frischmörtel sowie die Sprengbarkeit der Formkörper und die Dispergierbarkeit der Trockenmörtelbestandteile nach der Wasserzugabe bei der Verarbeitung zu Frischmörtels zu verbessern.

Diese Aufgabe wird durch die Merkmale des Anspruchs 1 und 5 gelöst. Vorteilhafte Weiterbildungen der Erfindung werden in den Unteransprüchen gekennzeichnet.

Die Erfindung gelingt somit mit einem körnigen, mineralischen Leichtzuschlagstoff, der porös oder porosiert und relativ mürbe ist und der bezüglich der wesentlichen anderen mineralischen Mörtelbestandteile nicht artfremd ist. Beim Pressen wirken die Leichtzuschlagstoffkörner Pressdruck verteilend, indem zumindest eine Teilmenge der Granulatkörner zerdrückt wird und insbesondere auch die zerdrückten Bestandteile verdrängt werden sowie den Pressdruck auf die feinen Gemengebestandteile des Trockenmörtels übertragen und das Feinanteilgemenge verdichten.

Für diesen Zweck werden vorzugsweise auch Leichtzuschlagstoffgranulate verwendet, die zumindest einen Anteil an gröberen Körnern aufweisen im Vergleich zu dem Anteil an groben unzerdrückbaren, nicht porösen Zuschlagstoffkörnern aus zum Beispiel Sanden, wie Gesteinssanden, zum Beispiel aus Quarzsand oder Kalksteinsand oder Schlackensand oder dergleichen. Die erforderliche Menge der Leichtzuschlagstoffgranulate ist empirisch zu ermitteln, ebenso wie der Anteil an gröberen Körnern.

Bekannt ist in diesem Zusammenhang, die beim Verpressen entstehenden Lücken und Zwickel zwischen den einzelnen Körnern mit kleineren Körnern zu füllen, um einen guten inneren Zusammenhalt des Formkörpers zu erzielen (DE 102 33 833 A1). Dazu wird vorgeschlagen, dass der Werktrockenmörtel eine auf die Aufgabe abgestimmte Sieblinie von mindestens zwei Korngrößenklassen enthält und dass die Korngrößenklassen so beschaffen sind, dass die mittlere Korngröße der größeren Korngrößenklasse das 1,5 bis 50-fache der mittleren Korngröße der kleineren Korngrößenklasse beträgt.

Die Erfindung geht einen anderen Weg, indem zerdrückbare, poröse Leichtzuschlagstoffgranulate als Presshilfsmittel verwendet werden. Diese erfindungsgemäß verwendeten porösen Zuschlagstoffgranulate wirken zudem synergistisch, indem neben der Verbesserung der Druckwirkung und der Verdichtung des Feinanteilgemenges mit der Folge der höheren Festigkeitsentwicklung der Formkörper beim Pressen auch die Benetzbarkeit mit Wasser bei der Frischmörtelherstellung beschleunigt wird. Denn die aus der Porosität und Kapillarität resultierende Saugfähigkeit sorgt dafür, dass das Anmachwasser bei der Herstellung von Frischmörtel sehr schnell aufgenommen und sehr schnell an mit Wasser reagierende Sprengmittel weitergeleitet wird, so dass die Wirkung letzterer beschleunigt wird.

Somit wird trotz der relativ mürben Struktur der erfindungsgemäß verwendeten Leichtzuschlagstoffkörner eine höhere Verfestigung der erfindungsgemäßen Formkörper gegenüber Formkörpern gleicher Zusammensetzung, jedoch ohne die erfindungsgemäßen Leichtzuschlagstoffe erzielt und erreicht, dass die Sprengmittel effektiver wirken. Die Verwendung mürber Leichtzuschlagstoffe zur Erhöhung der Festigkeit von gepressten Formkörpern ist normalerweise widersinnig und die festigkeitssteigernde Wirkung ist überraschend. Man hätte erwarten müssen, dass die mürben Leichtzuschlagstoffkörner einer Verfestigung der Formkörper entgegenwirken.

Als poröse mineralische Leichtzuschlagstoffe werden zum Beispiel Granulate aus hydrothermal gehärtetem Porenbeton und/oder hydrothermal gehärtetem Schaumbeton und/oder allgemein poröses Granulat aus Kalziumsilikathydrat-Phasen (CSH-Phasen) und/oder expandiertem Perlit und/oder expandiertem Vermiculit und/oder Bims und/oder Blähton verwendet. Bevorzugt wird jedoch die Verwendung von Porenbeton- und/oder Schaumbetongranulat. Das Gefüge von Porenbeton- und Schaumbetongranulat ist bekannt. Es ist im Wesentlichen ausgebildet aus einem fein porösen Kristallgerüst aus Calciumsilikathydraten und relativ groben, durch Porosierung erzeugten Poren.

Die Leichtzuschlagstoffgranulate können mit maximalen Korngrößen z. B. bis 8 mm verwendet werden. Insbesondere beträgt die maximale Korngrö-βe bis 4 mm, ganz besonders bis 2 mm, vorzugsweise bis 1 mm. Dabei können die Leichtzuschlagstoffe wie auch die beim Pressen der Formkörper unzerdrückbaren Zuschlagstoffe eine übliche, durch einen Zerkleinerungsvorgang bedingte stetige Kornverteilung aufweisen oder Kornbänder sein mit Korngrößen zwischen bestimmten Korngrenzen, z. B. können Mehlkornanteile bis 0,063 mm fehlen.

Bei Verwendung von Leichtzuschlagstoffgranulaten und Zuschlagstoffen mit Korngrößen bis maximal 1 mm eignet sich der erfindungsgemäße Trockenmörtelformkörper insbesondere zur Herstellung eines Dünnbettmörtels. Ein Dünnbettmörtel ist ein Mörtel, der mit einer Dicke bis 1 mm aufgetragen wird und mit welchem Poren- oder Schaumbetonformkörper oder Kalksandsteinkörper mit planparallelen Flächen oder plan geschliffene keramische Ziegelsteine vermörtelt werden können.

Die erfindungsgemäß verwendeten porösen Leichtzuschlagstoffgranulate weisen zweckmäßigerweise eine relativ geringe Korndruckfestigkeit zwischen z. B. 2 und 65 kN, insbesondere zwischen 2 und 30 kN auf, gemessen nach DIN 4226-3 (Zylinderverfahren).

Vorteilhaft ist, wenn die porösen Leichtzuschlagstoffgranulate trocken sind und eine Restfeuchte von maximal 5, insbesondere maximal 3, vorzugsweise maximal 1, ganz besonders maximal 0,5 oder sogar maximal 0,3 Gew.-% aufweisen. Ihre Rohdichte liegt z. B. zwischen 0,3 und 0,8, insbesondere zwischen 0,4 und 0,6 kg/m³.

Die Zusatzmengen der porösen Leichtzuschlagstoffgranulate im Trockenmörtelgemenge liegen vorzugsweise zwischen 2 und 50, insbesondere zwischen 3 und 20 Gew.-%.

Die erfindungsgemäß verwendeten porösen, die Presswirkung unterstützenden Leichtzuschlagstoffgranulate können mit jedem bekannten, z. B. in der DE 102 33 833 A1 beschriebenen, den Zerfall der Formkörper beschleunigenden Desintegrationsmittel bzw. Sprengmittel zusammenwirken. Davon wird vorzugsweise Aluminiumpulver verwendet.

Im Rahmen der Erfindung wurde herausgefunden, dass besonders effektiv als Zerfalls- und Dispergiermittel gebrannter Kalk, insbesonderer sogenannter weich gebrannter Kalk, mit z. B. t₆₀-Werten nach der Nasslöschkurve < 5 Minuten, insbesondere < 3 Minuten, ganz besonders < 1 Minuten (Baukalknorm DIN EN 459, Teil 2) wirkt. Branntkalk löscht bekanntlich mit Wasser sehr schnell und heftig unter Temperaturerhöhung zu Kalkhydrat ab mit einer erheblichen Volumenvergrößerung, die bei der erfindungsgemäßen Verwendung sprengend wirkt. Das Kalkhydrat kann im erfindungsgemäßen Trockenmörtel zudem als Bindemittel wirken und die Geschmeidigkeit des Frischmörtels verbessern.

Die EP 211 364 A1 beschreibt im Beispiel 1 eine Trockenmischung aus Hartbrand, K₂CO₃, Superverflüssiger, Schleifsand, Stuckgips und Zitronensäuremonohydrat. Diese Mischung wird zur Sprengung von u. a. Felsgestein verwendet, indem sie mit Wasser versetzt in ein Bohrloch eingebracht wird. Nach der Einbringung löscht der Branttkalk mit Wasser unter Volumenvergrößerung ab, wobei die Volumenvergrößerung eine Sprengung des Felsmaterials bewirkt.

Der Branntkalk sollte vorzugsweise über 80 Gew.-%, insbesondere über 90 Gew.-% CaO, und insbesondere weniger als 2 Gew.-%, vorzugsweise weniger als 1,5 Gew.-% CO₂, und zweckmäßigerweise weniger als 2, insbesondere weniger als 1 Gew.-% H₂O aufweisen.

Besonders effektiv ist eine Kornverteilung des Branntkalks wie folgt, ausgedrückt als Siebrückstand bzw. Siebdurchgang.
a) als Feinkalk:

| | |
|---|---|
| > 0,2 mm | < 0,1 Gew.-% Rückstand |
| > 0,09 mm | < 5 Gew.-%, insbesondere < 2 Gew.-% Rückstand |

b) als körniger Kalk (mit hoher Reaktivität):

| | |
|---|---|
| bei 6,3 mm | < 5 Gew.-%, insbesondere < 1 Gew.-% Rückstand |
| bei 4 mm | < 20 Gew.-%, insbesondere < 10 Gew.-% Rückstand |
| bei 1 mm | < 20 Gew.-%, insbesondere < 10 Gew.-% Durchgang |
| bei 0,5 mm | < 15 Gew.-%, insbesondere < 10 Gew.-% Durchgang |

Vorzugsweise enthalten die gepressten Trockenmörtelformkörper Branntkalk in einer Menge von 0,1 - 8, insbesondere von 0,5 - 5 Gew.-%.

Branntkalk kann vorteilhaft auch zusammen mit einem weiteren, in einem alkalischen Milieu heftig und sehr schnell mit Wasser reagierenden, Gas bildenden Sprengmittel, wie z. B. einem Metallpulver, insbesondere Aluminiumpulver, verwendet werden, wodurch die Sprengwirkung verstärkt wird. Die Reaktion des Aluminiumpulvers mit Ca(OH)₂ ist z. B. aus der Porenbetonherstellung bekannt.

Aluminiumpulver ist vorzugsweise in Mengen von 0,05 - 0,3, insbesondere von 0,1 bis 0,25 Gew.-% im Trockenmörtel enthalten. Vorteilhaft ist ein inniges Vermischen und/oder Brikettieren des Branntkalkes und des Aluminiumpulvers vor dem Zumischen zu den Trockenmörtelkomponenten.

Anstelle von Branntkalk oder in Kombination damit kann auch gebrannter Dolomit verwendet werden, wenn dieser umgehend wie Branntkalk mit Wasser heftig unter Volumenzunahme ablöscht.

Diese Sprengmittel werden erfindungsgemäß auch in an sich bekannten oder anderen gepressten Trockenmörtelformkörpern verwendet, die andere Presshilfsmittel als die erfindungsgemäß verwendeten aufweisen.

In den zu erfindungsgemäßen Trockenmörtelformkörpern zu pressenden Trockenmörtelmischungen können auch noch weitere Presshilfsmittel neben den erfindungsgemäß verwendeten Leichtzuschlagstoffen enthalten sein, wie sie z. B. in der DE 102 33 833 A1 beschrieben werden.

Besonders geeignet sind als weitere Presshilfsmittel in Kombination mit den erfindungsgemäß verwendeten porösen Leichtzuschlagstoffgranulaten Schichtsilikate, wie Talk und/oder Tonminerale, z. B. Bentonit oder Stearate, z. B. Calcium- und/oder Magnesiumstearate. Letztere verbessern insbesondere die Verpressbarkeit der Trockohmörtolmischungen und die Fließeigenschaften des Frischmörtels. Die genannten Stearate sind vorzugsweise in Mengen von 0,1 bis 5, insbesondere von 0,2 bis 3 Gew.-% im Trockenmörtelgemenge enthalten. Die Schichtsilikate unterstützen zudem die Sprengwirkung der Sprengmittel durch ihr an sich bekanntes Quellen bei der Wasseraufnahme. Die Schichtsilikate sind z. B. in Mengen von 0,1 bis 10, insbesondere von 0,2 bis 5 Gew.-% im Trockenmörtel enthalten.

Erfindungsgemäße Trockenmörtelformkörper werden z. B. gepresst, wie in der DE 102 33 833 A1 beschrieben. Insoweit wird auf diese Druckschrift verwiesen. Die Formkörper werden z. B. auch mit Raumformen hergestellt, wie sie in der DE 102 33 833 A1 beschrieben werden, hergestellt. Auch insoweit wird auf diese Druckschrift verwiesen. Bevorzugt werden die erfindungsgemäßen Briketts in Walzenpressen unter einem Pressdruck zwischen 60 und 120 kN, insbesondere zwischen 70 und 80 kN, und Tabletten in Stempelpressen zwischen 30 und 80 kN, insbesondere zwischen 35 und 45 kN, hergestellt.

Die erfindungsgemäßen Trockenmörtelformkörper weisen hauptsächlich z. B. die folgenden Bestandteile auf:
Mindestens ein Bindemittel: 10 - 50, insbesondere 15 - 35 Gew.-%
   Bindemittel sind z. B. Zemente, Baukalke, Gips, Hüttensandmehl plus Anreger, Puzzolane plus Anreger.
Mindestens ein erfindungsgemäßes Presshilfsmittel: 2 - 50, insbes. 3 - 20 Gew.-%
   Diese Presshilfsmittel sind Leichtzuschlagstoffgranulate wie insbesondere CSH-Granulat (Poren-/Schaumbeton), expandierter Perlit, expandierter Vermiculit, Bims oder Blähton.
Mindestens ein erfindungsgemäßes Sprengmittel: 0,1 - 8, insbes. 0,5 - 5 Gew.-%
   Diese Sprengmittel sind Branntkalk und/oder gebrannter Dolomit.
Gegebenenfalls mindestens ein Zusatzmittel: 0 bis 5, insbes. 0,05 - 1 Gew.-%
   Zusatzmittel sind z. B. Abbinderegler und/oder Erstarrungsregler und/oder Dispergiermittel und/oder Hydrophobierungsmittel und/oder Luftporenbildner und/oder Fließmittel und/oder Wasserretentionsmittel und/oder Redispersionspulver.
Mindestens einen mineralischen Zuschlagstoff:
   Zuschlagstoffe sind z. B. Gesteinsmehle und/oder Gesteinssande wie Quarzmehl und/oder Quarzsand und/oder Kalksteinmehl und/oder Kalksteinsand und/oder andere Gesteinsmehle und - körnungen nach EN 12620, EN 13139, EN 13055-1 oder DIN 4301.

Die erfindungsgemäßen Trockenmörtelzusammensetzungen der Formkörper sind vorzugsweise derart bezüglich ihrer Betandteile zusammengestellt, dass sie nur noch mit Wasser angemacht einen gebrauchsfertigen Frischmörtel ergeben. Es liegt im Rahmen der Erfindung, Trockenmörtelformkörperzusammensetzungen herzustellen, die auf der Baustelle noch mit Additiven und/oder weiteren Zuschlagstoffen ergänzt werden können und sollen.

Die erfindungsgemäßen Formkörper weisen vorzugsweise Volumina zwischen 0,001 und 400, insbesondere zwischen 1 und 20 cm³ auf. Daneben besteht die Möglichkeit, Formkörper zu Granulat zu brechen mit z. B. Körnungen zwischen 0,2 - 8 mm.

Es liegt im Rahmen der Erfindung, die erfindungsgemäß verwendeten Presshilfsmittel in Form von porösen Leichtzuschlagstoffgranulaten mit feinteiligen Produkten wie Weißkalkhydrat, hochdisperser Kieselsäure und/oder Fasern zu ergänzen. Möglich ist auch die Verwendung von pflanzlichen Faserstoffen.

Es liegt außerdem im Rahmen der Erfindung, neben der Verwendung von Branntkalk und/oder gebranntem Dolomit Salze mit hydrostatischem Kristallisationsdruck, wie z. B. Calciumchlorid, zu verwenden.

Als Zusatzmittel haben sich insbesondere pulverförmige Superverflüssiger wie Naphtalinsulfonat oder Melaminharz bewährt.

Die Menge dieser zusätzlichen Stoffe oder anderer Zusatzstoffe richtet sich nach der Verträglichkeit der Trockenmörtelmischungen bezüglich dieser Stoffe.

Anhand eines Beispiels wird im Folgenden aufgezeigt, dass das Presshilfsmittel auch erfindungsgemäß wirksam ist, wenn die maximale Korngröße des Presshilfsmittels kleiner ist als die maximale Korngröße des beim Pressen der Formkörper unzerdrückbaren Zuschlagstoffs.

Es wurden die folgenden Mörtelmischungen erstellt:
a) 30 Gew.-% Portlandzement
   13 Gew.-% Kalksteinmehl
   45 Gew.-% Kalksteinbrechsand mit einem Kornband von 0,1-0,6 mm
   2 Gew.-% Weißfeinkalk
   0,05 Gew.-% Aluminiumpulver
   10 Gew.-% Porenbetongranulat
b) 30 Gew.-% Portlandzement
   13 Gew.-% Kalksteinmehl
   50 Gew.-% Kalksteinbrechsand mit einer Körnung von 0,1-0,6 mm
   2 Gew.-% Weißfeinkalk
   0,05 Gew.-% Aluminiumpulver
   5 Gew.-% Porenbetongranulat

Den Mörtelmischungen a) und b) wurden jeweils zwei Porenbetongranulate mit jeweils unterschiedlicher maximaler Korngröße und folgender Kornverteilung zugesetzt.

| | | Porenbeton-granulat | Porenbeton-Granulat |
|---|---|---|---|
| | | 0-1,2 mm | 0-0,5 mm |
| Siebrückstand | | | |
| R_{1,4 mm} | % | 0 | 0 |
| R_{1,0 mm} | % | 5 | 0 |
| R_{0,63 mm} | % | 67 | 0 |
| R_{0,5 mm} | % | 86 | 2 |
| R_{0,4 mm} | % | 91 | 38 |
| R_{0,2 mm} | % | 98 | 90 |
| R_{0,09 mm} | % | 99 | 100 |

Aus den Mörtelmischungen wurden auf Walzenpressen Briketts mit einer Länge von 30 mm, einer Breite von 20 mm und einer Dicke von 15 mm mit einer Presskraft von 75 kN gepresst.

Zur Bestimmung der Festigkeit der Briketts wurden die Briketts einem so genannten Shatter-Test unterworfen. Dabei wurden 100 g Briketts in ein Kunststoffrohr mit einer Länge von 710 mm und einem Durchmesser von 80 mm eingebracht und das Rohr verschlossen. Das Rohr wird 50 mal um 180° gekippt. Anschließend wird das Rohr entleert und der Inhalt auf ein Sieb mit einer Maschenweite von 3,15 mm gegeben. Es wird der Siebdurchgang festgestellt und mit 100 multipliziert, wobei ein Ergebnis in % ausgedrückt festgestellt wird.

Bei dem erfindungsgemäßen Beispiel konnte bei jeweils gleicher Dosierung des Leichtzuschlagstoffgranulats kein Unterschied in der Festigkeit der gepressten Formkörper festgestellt werden. Die ermittelten Werte lagen bei 25% für Formkörper mit Mörtelmischungen gemäß b) und bei 20% für Formkörper mit Mörtelmischungen gemäß a). Daraus resultiert, dass die maximale Korngröße des Leichtzuschlagstoffgranulats keinen wesentlichen Einfluss auf die Festigkeit der Formkörper hat.

Ein Dünnbettmörtel, hergestellt aus erfindungsgemäßen Trockenmörtelformkörpern, hat eine besonders geschmeidige Konsistenz und ist daher sehr gut verarbeitbar.

Es hat sich gezeigt, dass das Anmachen eines Frischmörtels mit Wasser aus einer in einem z. B. oben offenen Gefäß, z. B. einem Trog, vorgelegten, trockenen Schüttung aus erfindungsgemäßen Trockenmörtelformkörpern oder aus aus Trockenmörtelformkörpern durch Zerkleinern hergestelltem körnigem erfindungsgemäßem Granulat und anschließender Wasserzugabe zu einem sehr homogenen Frischmörtel führt, in dem die Bestandteile der Trockenmörtolformkörper sehr homogen verteilt sind, ohne dass "Nester" mit lokal ungleich verteilten Bestandteilen der Mörtelzusammensetzung auftreten. Dies ergibt sich in überraschender Weise durch die in der trockenen Schüttung vorhandenen Hohlräume zwischen den Trockenmörtelformkörpern oder den Granulatkörnern, wenn - wie nach einer Ausführungsform der Erfindung bevorzugt - die trockenen Trockenmörtelformkörper oder das Granulat in einem Gefäß vorgelegt werden und erst danach die zugehörige Wassermenge zugegeben wird. Das Wasser dringt unmittelbar in die Hohlräume bzw. Zwickel zwischen den Trockenmörtelformkörpern oder dem Granulat ein und durchdringt sehr schnell die gesamte Schüttung und bewirkt eine sehr rasche Kontaktierung der Trockenmörtelformkörper oder Granulatkörner mit Wasser, so dass die Sprengreaktion der Sprengmittel sehr schnell eingeleitet wird, und zwar ziemlich gleichzeitig innerhalb der gesamten Schüttung. Ein Durchmischen ist bei der Wasserzugabe grundsätzlich nicht erforderlich. Die Bestandteile der Trockenmörtelformkörper werden durch das mit dem Wasser reagierenden Sprengmittel auseinander getrieben und dringen teilweise in die Hohlräume bzw. Zwickel ein, die mit Frischmörtelmaterial ausgefüllt werden.

Dadurch, dass bei der Wasserzugabe nicht mehr gemischt werden muss, entstehen auch keine Inhomogenitäten im Frischmörtel, weil die Bestandteile bereits in den Formkörpern oder Granulaten homogen verteilt vorliegen. Es findet lediglich eine Expansion statt, die diese Homogenität nicht beeinträchtigt.

Es liegt im Rahmen der Erfindung, die Korngrößenverteilung der Trockenmörtelformkörper oder des Granulats in einer trockenen Schüttung so einzurichten, dass die erforderliche und vorbestimmte Menge an Anmachwasser für den Frischmörtel ohne beeinträchtigenden Widerstand in die Zwickel fließt und an die Trockenmörtelformkörper oder Granulatkörner gelangen kann und dass für die Expansion der Trockenmörtelformkörper oder Granulatkörner ausreichend Raum zur Verfügung steht, so dass die Expansion nicht behindert wird und die Zwickel ausgefüllt werden. Es ist somit auch ein Merkmal der Erfindung, das Gesamtvolumen des Zwickelraumes so zu wählen, dass gerade die für eine vorbestimmte Frischmörtelkonsistenz erforderliche Wassermenge aufgenommen werden kann.

## Patentansprüche

1. Gepresste Trockenmörtelformkörper aufweisend
- mindestens ein mineralisches, insbesondere hydraulisches Bindemittel wie Zement und/oder Kalk und/oder Gips und/oder Hüttensandmehl und/oder Puzzolanen, vorzugsweise in Mengen von 10 bis 50, insbesondere von 15 bis 35 Gew.-%
- mindestens einen mineralischen Zuschlagstoff in Form von Quarzsand und/oder Quarzmehl und/oder Kalksteinmehl und/oder Kalksteinsand, vorzugsweise in Mengen von 50 bis 90, insbesondere von 60 bis 80 Gew.-%
- mindestens ein mit Wasser reagierendes Sprengmittel
- mindestens ein Presshilfsmittel
- gegebenenfalls mindestens ein Zusatzmittel wie Abbinderegler und/oder Fließmittel und/oder Luftporenbildner, Wasserretentionsmittel und/oder Redispersionspulver, vorzugsweise in Mengen bis 5, insbesondere von 0,05 bis 1 Gew.-%,
wobei
die Formkörper als Presshilfsmittel mindestens ein mineralisches, poröses oder porosiertes, trockenes Leichtzuschlagstoffgranulat aus CSH-Granulat, z. B. Porenbeton und/oder Schaumbeton, und/oder expandiertem Perlit und/oder expandiertem Vermiculit und/oder Bims und/oder Blähton mit Restfeuchten von maximal 5, insbesondere maximal 3, vorzugsweise maximal 1 Gew.-%, vorzugsweise in Mengen von 3 bis 50, insbesondere von 2 bis 30 Gew.-% und Korndruckfestigkeiten z. B. zwischen 2 und 65, insbesondere zwischen 3 und 30 kN, enthalten, wobei diese Presshilfsmittel z. B. Korngrößen bis 2 mm aufweisen können.

2. Trockenmörtelformkörper nach Anspruch 1,
**dadurch gekennzeichnet, dass**
sie mindestens ein weiteres Presshilfsmittel enthalten, insbesondere in Form mindestens eines Schichtsilikats wie Talk und/oder Tonmineral, wie Bentonit, z. B. in Mengen von 0,1 bis 10, insbesondere von 0,2 bis 5 Gew.-% und/oder insbesondere in Form mindestes eines Stearats wie Calcium- und/oder Magnesiumstearat z. B. in Mengen von 0,1 bis 5, insbesondere von 0,2 bis 3 Gew.-%.

3. Gepresste Trockenmörtelformkörper, insbesondere nach Anspruch 1 und/oder 2, aufweisend
- mindestens ein mineralisches Bindemittel, insbesondere hydraulisches Bindemittel wie Zement und/oder Kalk und/oder Gips und/oder Hüttensandmehl und/oder Puzzolanen, vorzugsweise in Mengen von 10 bis 50, insbesondere von 15 bis 35 Gew.-%
- mindestens einen mineralischen Zuschlagstoff in Form von Quarzsand und/oder Quarzmehl und/oder Kalksteinmehl und/oder Kalksteinsand, vorzugsweise in Mengen von 50 bis 90, insbesondere von 60 bis 80 Gew.-%
- mindestens ein Sprengmittel
- mindestens ein Presshilfsmittel
- gegebenenfalls mindestens ein Zusatzmittel wie Abbinderegler und/oder Fließmittel und/oder Luftporenbildner, Wasserretentionsmittel und/oder Redispersionspulver, vorzugsweise in Mengen bis 5, insbesondere von 0,05 bis 1 Gew.-%,
wobei
die Formkörper als Sprengmittel Branntkalk und/oder gebrannten Dolomit, insbesondere weich gebrannten Kalk mit t₆₀-Werten < 5, vorzugsweise < 3, ganz besonders < 1 Minuten, vorzugsweise in Mengen von 0,1 bis 8, insbesondere von 0,5 bis 5 Gew.-% enthalten, wobei diese Sprengmittel z. B. folgende Kornverteilungen aufweisen, ausgedrückt als Siebrückstand bzw. Siebdurchgang:
a) als Feinkalk:
| | |
|---|---|
| > 0,2 mm | < 0,1 Gew.-% Rückstand |
| > 0,09 mm | < 5 Gew.-%, insbesondere < 2 Gew.-% Rückstand |
b) als körniger Kalk (mit hoher Reaktivität):
| | |
|---|---|
| bei 6,3 mm | < 5 Gew.-%, insbesondere < 1 Gew.-% Rückstand |
| bei 4 mm | < 20 Gew.-%, insbesondere < 10 Gew.-% Rückstand |
| bei 1 mm | < 20 Gew.-%, insbesondere < 10 Gew.-% Durchgang |
| bei 0,5 mm | < 15 Gew.-%, insbesondere < 10 Gew.-% Durchgang |

4. Trockenmörtelformkörper nach Anspruch 3,
**dadurch gekennzeichnet, dass**
sie ein weiteres Sprengmittel, z. B. einen mit Wasser Gas bildenden Stoff, z. B. Metallpulver wie Aluminiumpulver in Mengen von 0,05 bis 0,5 Gew.-% enthalten.

5. Granulat aus durch Brechen zerkleinerten Trockenmörtelformkörpern mit den Merkmalen von mindestens einem der Ansprüche 1 bis 4.

6. Verfahren zur Herstellung von Trockenmörtelformkörpern nach einem oder mehreren der Ansprüche 1 bis 5, wobei ein Trockenmörtelgemenge mit der im Anspruch 1 angegebenen Zusammensetzung bzw. Bestandteilen hergestellt und anschließend daraus Formkörper gepresst werden, z. B. mit Formkörpervolumina zwischen 0,001 und 400, insbesondere zwischen 1 und 20 cm³, und vorzugsweise die Formkörper zu Granulaten gebrochen werden.

7. Verfahren nach Anspruch 6,
**dadurch gekennzeichnet, dass**
ein Leichtzuschlagstoffgranulat als Presshilfsmittel mit einer maximalen Korngröße verwendet wird, die größer ist als die maximale Korngröße eines verwendeten mineralischen, beim Pressen unzerdrückbaren Zuschlagstoffs.

8. Verfahren nach Anspruch 7,
**dadurch gekennzeichnet, dass**
ein Leichtzuschlagstoffgranulat verwendet wird, dessen maximale Korngröße 20 - 50 % größer ist als das Größtkorn eines Zuschlagstoffs.

9. Verfahren nach einem oder mehreren der Ansprüche 6 bis 8, insbesondere nach Anspruch 6,
**dadurch gekennzeichnet, dass**
ein Leichtzuschlagstoffgranulat verwendet wird, dessen maximale Korngröße gleich groß oder kleiner ist als die maximale Korngröße eines verwendeten mineralischen, beim Pressen unzerdrückbaren Zuschlagstoffs.

10. Verwendung von Trockenmörtelformkörpern oder Granulaten aus Trockenmörtelformkörpern nach einem oder mehreren der Ansprüche 1 bis 5, insbesondere hergestellt nach einem oder mehreren der Verfahrensansprüche 6 bis 9,
**dadurch gekennzeichnet,dass**
eine trockene Schüttung von Trockenmörtelformkörpern oder von aus Trockenmörtelformkörpern hergestelltem Granulat in einem Gefäß vorgelegt wird, wonach lediglich Wasser in das Gefäß eingebracht wird in einer Menge, die ausreicht zur Bildung eines Frischmörtels vorgegebener Konsistenz unter Mitwirkung des Sprengmittels.

11. Verwendung nach Anspruch 10,
**dadurch gekennzeichnet, dass**
eine Kornverteilung in der Schüttung der Trockenmörtelformkörper oder des aus den Trockenmörtelformkörpern hergestellten Granulats so eingestellt wird, dass der Zwickelraum zwischen den Trockenmörtelformkörpern bzw. den Granulatkörnern nach Zugabe von Wasser von Trockenmörtelformkörpermaterial bzw. Granulatmaterial ausgefüllt wird und vorzugsweise sich auch dabei eine vorbestimmte Konsistenz des sich bildenden Frischmörtels einstellt.

## Claims

1. Pressed dry mortar shaped bodies comprising
- at least one mineral, in particular hydraulic, binder such as cement and/or lime and/or gypsum and/or ground granulated blast-furnace slag and/or pozzolana, preferably in quantities of 10 to 50, in particular 15 to 35 wt.%
- at least one mineral aggregate in the form of quartz sand and/or quartz meal and/or limestone meal and/or limestone sand, preferably in quantities of 50 to 90, in particular 60 to 80 wt.%
- at least one disintegrant which reacts with water
- at least one pressing auxiliary
- optionally at least one admixture such as a setting regulator and/or flow control agent and/or air entraining agent, water retention agent and/or redispersion powder, preferably in quantities of up to 5, in particular 0.05 to 1 wt.%,
wherein
the shaped bodies contain as pressing auxiliary at least one mineral, porous or porosifed, dry granulated lightweight aggregate comprising CSH granules, e.g. aerated concrete and/or foamed concrete, and/or expanded perlite and/or expanded vermiculite and/or pumice and/or expanded clay with residual moisture contents of no more than 5, in particular no more than 3, preferably no more than 1 wt.%, preferably in quantities of 3 to 50, in particular 2 to 30 wt.%, and particle compressive strengths e.g. between 2 and 65, in particular between 3 and 30 kN, wherein these pressing auxiliaries can have particle sizes e.g. of up to 2 mm.

2. The dry mortar shaped bodies according to claim 1,
**characterised in that**
they contain at least one further pressing auxiliary, in particular in the form of at least one layered silicate such as talc and/or clay mineral, such as bentonite, e.g. in quantities of 0.1 to 10, in particular 0.2 to 5 wt.% and/or in particular in the form of at least one stearate such as calcium and/or magnesium stearate e.g. in quantities of 0.1 to 5, in particular 0.2 to 3 wt.%.

3. Pressed dry mortar shaped bodies, in particular according to claim 1 and/or 2, comprising
- at least one mineral binder, in particular hydraulic binder such as cement and/or lime and/or gypsum and/or ground granulated blast-furnace slag and/or pozzolana, preferably in quantities of 10 to 50, in particular 15 to 35 wt.%
- at least one mineral aggregate in the form of quartz sand and/or quartz meal and/or limestone meal and/or limestone sand, preferably in quantities of 50 to 90, in particular 60 to 80 wt.%
- at least one disintegrant
- at least one pressing auxiliary
- optionally at least one admixture such as a setting regulator and/or flow control agent and/or air entraining agent, water retention agent and/or redispersion powder, preferably in quantities of up to 5, in particular 0.05 to 1 wt.%,
wherein
the shaped bodies contain as disintegrants burnt lime and/or burnt dolomite, in particular soft burnt lime with t₆₀ values < 5, preferably < 3 minutes, most particularly < 1 minute, preferably in quantities of 0.1 to 8, in particular 0.5 to 5 wt.%, these disintegrants having e.g. the following particle size distributions, expressed as sieve residue or undersize:
a) as fine lime:
> 0.2 mm < 0.1 wt.% residue
> 0.09 mm < 5 wt.%, in particular < 2 wt.% residue
b) as granular lime (with high reactivity):
at 6.3 mm < 5 wt.%, in particular < 1 wt.% residue
at 4 mm < 20 wt.%, in particular < 10 wt.% residue at 1 mm < 20 wt.%, in particular < 10 wt.% undersize at 0.5 mm < 15 wt.%, in particular < 10 wt.% undersize.

4. The dry mortar shaped bodies according to claim 3,
**characterised in that**
they contain a further disintegrant, e.g. a substance which forms gas with water, e.g. metal powder such as aluminium powder in quantities of 0.05 to 0.5 wt.%.

5. Granules comprising dry mortar shaped bodies having the features of at least one of claims 1 to 4 that have been ground by crushing.

6. A process for the production of dry mortar shaped bodies according to one or more of claims 1 to 5, wherein a dry mortar mixture with the composition or components given in claim 1 is produced and then shaped bodies are pressed therefrom, e.g. with shaped body volumes of between 0.001 and 400, in particular between 1 and 20 cm³, and preferably the shaped bodies are crushed to form granules.

7. The process according to claim 6,
**characterised in that**
a granulated lightweight aggregate is used as pressing auxiliary having a maximum particle size which is greater than the maximum particle size of a mineral aggregate being used which cannot be crushed during pressing.

8. The process according to claim 7,
**characterised in that**
a granulated lightweight aggregate is used, the maximum particle size of which is 20 - 50% greater than the largest particle of an aggregate.

9. The process according to one or more of claims 6 to 8, in particular according to claim 6,
**characterised in that**
a granulated lightweight aggregate is used, the maximum particle size of which is equally as large as or smaller than the maximum particle size of a mineral aggregate being used which cannot be crushed during pressing.

10. Use of dry mortar shaped bodies or of granules comprising dry mortar shaped bodies according to one or more of claims 1 to 5, in particular produced according to one or more of process claims 6 to 9,
**characterised in that**
a dry charge of dry mortar shaped bodies or of granules produced from dry mortar shaped bodies is presented in a container, after which only water is introduced into the container in a sufficient quantity to form a fresh mortar of predetermined consistency with the assistance of the disintegrant.

11. The use according to claim 10,
**characterised in that**
a particle size distribution is established in the charge of the dry mortar shaped bodies or of the granules produced from the dry mortar shaped bodies such that after addition of water, the interspace between the dry mortar shaped bodies or the granules is filled with dry mortar shaped body material or granule material and preferably at the same time a predetermined consistency of the fresh mortar which forms is also established.

## Revendications

1. Corps moulés comprimés à base de mortier sec, présentant
- au moins un liant minéral, en particulier hydraulique, tel que du ciment et/ou de la chaux et/ou du plâtre et/ou de la farine de laitier granulé et/ou des pouzzolanes, de préférence en des quantités allant de 10 à 50 % en poids, en particulier allant de 15 à 35 % en poids,
- au moins un agrégat minéral sous la forme d'un sable siliceux et/ou d'une poudre de quartz et/ou d'une poudre de pierre à chaux et/ou d'un sable de pierre à chaux, de préférence en des quantités allant de 50 à 90 % en poids, en particulier allant de 60 à 80 % en poids,
- au moins un délitant réagissant à l'eau,
- au moins un auxiliaire de compression,
- éventuellement au moins un additif tel qu'un agent de régulation de prise et/ou un agent d'écoulement et/ou un entraîneur d'air, un agent de rétention d'eau et/ou une poudre de redispersion, de préférence en des quantités pouvant aller jusqu'à 5 % en poids, en particulier allant de 0,05 à 1 % en poids,
dans lequel
les corps moulés contiennent en tant qu'auxiliaire de compression, au moins un granulat d'agrégat léger constitué d'un granulat d'hydrate de silicate de calcium, minéral, poreux ou rendu poreux, sec, par exemple du béton poreux et/ou du béton mousse et/ou de la perlite expansée et/ou de la vermiculite expansée et/ou de la pierre ponce et/ou de l'argile expansée présentant des humidités résiduelles de maximum 5 % en poids, en particulier de maximum 3 % en poids, de préférence de maximum 1 % en poids, de préférence en des quantités allant de 3 à 50 % en poids, en particulier allant de 2 à 30 % en poids, et présentant des résistances à la pression comprises par exemple entre 2 et 65 kN, en particulier comprises entre 3 et 30 kN, dans lequel lesdits auxiliaires de compression peuvent présenter par exemple une taille de particules pouvant aller jusqu'à 2 mm.

2. Corps moulés à base de mortier sec selon la revendication 1,
**caractérisés en ce que**
ils contiennent au moins un autre auxiliaire de compression, en particulier sous la forme d'au moins un phyllosilicate tel que du talc et/ou un minéral argileux, tel que de la bentonite, par exemple en des quantités allant de 0,1 à 10 % en poids, en particulier allant de 0,2 à 5 % en poids et/ou en particulier sous la forme d'au moins un stéarate, tel que du stéarate de calcium et/ou de magnésium, par exemple en des quantités allant de 0,1 à 5 % en poids, en particulier allant de 0,2 à 3 % en poids.

3. Corps moulés comprimés à base de mortier sec, en particulier selon la revendication 1 et/ou 2, présentant
- au moins un liant minéral, en particulier un liant hydraulique, tel que le ciment et/ou la chaux et/ou le plâtre et/ou la farine de laitier granulé et/ou des pouzzolanes, de préférence en des quantités allant de 10 à 50 % en poids, en particulier allant de 15 à 35 % en poids,
- au moins un agrégat minéral sous la forme d'un sable siliceux et/ou d'une farine de quartz et/ou d'une poudre de pierre à chaux et/ou d'un sable de pierre à chaux, de préférence en des quantités allant de 50 à 90 % en poids, en particulier allant de 60 à 80 % en poids,
- au moins un délitant,
- au moins un auxiliaire de compression,
- éventuellement au moins un additif, tel qu'un agent régulateur de prise et/ou un agent d'écoulement et/ou un entraîneur d'air, un agent de rétention d'eau et/ou une poudre de redispersion, de préférence en des quantités allant jusqu'à 5 % en poids, en particulier allant de 0,05 à 1 % en poids,
dans lequel
les corps moulés contiennent en tant que délitant de la chaux vive et/ou de la dolomite calcinée, en particulier de la chaux vive molle présentant des valeurs t₆₀ < 5 minutes, de préférence < 3 minutes, tout particulièrement < 1 minute, de préférence en des quantités allant de 0,1 à 8 % en poids, en particulier allant de 0,5 à 5 % en poids, dans lequel lesdits délitants présentent par exemple les granulométries qui suivent, exprimées sous la forme de refus de tamisage ou de passe au tamis :
a) en tant que chaux pulvérisée :
| | |
|---|---|
| > 0,2 mm | < 0,1 % en poids de refus de tamisage |
| > 0,09 mm | < 5 % en poids, en particulier < 2 % en poids de refus de tamisage |
b) en tant que chaux granulaire (présentant une réactivité élevée) :
| | |
|---|---|
| pour 6,3 mm | < 5 % en poids, en particulier < 1 % en poids du refus de tamisage |
| pour 4 mm | < 20 % en poids, en particulier < 10 % en poids du refus de tamisage |
| pour 1 mm | < 20 % en poids, en particulier < 10 % du passage |
| pour 0,5 mm | < 15 % en poids, en particulier < 10 % en poids du passage. |

4. Corps moulés à base de mortier sec selon la revendication 3,
**caractérisés en ce que**
ils contiennent un autre délitant, par exemple une substance formant du gaz avec de l'eau, par exemple une poudre métallique telle que de la poudre d'aluminium, en des quantités allant de 0,05 à 0,5 % en poids.

5. Granulat constitué de corps moulés à base de mortier sec broyés par concassage présentant les caractéristiques d'au moins une des revendications 1 à 4.

6. Procédé de fabrication de corps moulés à base de mortier sec selon l'une quelconque ou plusieurs des revendications 1 à 5, dans lequel une quantité de mortier sec est fabriquée avec la composition ou les composants indiqués dans la revendication 1 et dans lequel immédiatement après des corps moulés en résultant sont comprimés, lesquels présentent par exemple des volumes compris entre 0,001 et 400 cm³, en particulier compris entre 1 et 20 cm³, et dans lequel de préférence les corps moulés sont concassés pour former des granulats.

7. Procédé selon la revendication 6,
**caractérisé en ce que**
un granulat d'agrégat léger est utilisé comme auxiliaire de compression présentant une taille maximale de particules plus grande que la taille maximale de particules d'un agrégat minéral utilisé, non pétrissable en cas de compression.

8. Procédé selon la revendication 7,
**caractérisé en ce que**
un granulat d'agrégat léger est utilisé, dont la taille maximale des particules est plus grande de 20 à 50 % que la taille des particules d'un agrégat.

9. Procédé selon l'une quelconque ou plusieurs de revendications 6 à 8, en particulier selon la revendication 6,
**caractérisé en ce que**
on utilise un granulat d'agrégat léger dont la taille maximale des particules est aussi grande ou plus petite que la taille maximale des particules d'un agrégat minéral utilisé, non pétrissable en cas de compression.

10. Utilisation de corps moulés à base de mortier sec ou de granulats constitués de corps moulés à base de mortier sec selon l'une quelconque ou plusieurs des revendications 1 à 5, en particulier fabriqués selon l'une quelconque ou plusieurs des revendications de procédé 6 à 9,
**caractérisée en ce que**
on place dans un récipient un produit en vrac sec de corps moulés à base de mortier sec ou de granulat fabriqué à partir des corps moulés à base de mortier sec, après quoi on introduit de l'eau dans le récipient en une quantité qui suffit pour former un mortier frais présentant une consistance prédéfinie en interagissant avec le délitant.

11. Utilisation selon la revendication 10,
**caractérisée en ce que**
une granulométrie est ajustée dans le produit en vrac des corps moulés à base de mortier sec ou du granulat fabriqué à partir des corps moulés à base de mortier sec de telle sorte que la zone de coin entre les corps moulés à base de mortier sec ou les particules de granulat est remplie après l'ajout d'eau du matériau de corps moulés à base de mortier sec ou de matériau de granulat et que de préférence, dans ce cadre, une certaine consistance du mortier frais se formant s'ajuste également.
